(19)

**Europäisches Patentamt**
**European Patent Office**
**Office européen des brevets**

(11) **EP 2 937 448 A1**

(12) **EUROPEAN PATENT APPLICATION**

(43) Date of publication:
**28.10.2015 Bulletin 2015/44**

(51) Int Cl.:
*C25B 11/04* (2006.01)    *C25B 1/04* (2006.01)
*C25B 1/10* (2006.01)

(21) Application number: **15159306.8**

(22) Date of filing: **17.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **25.04.2014 JP 2014091014**
**05.06.2014 JP 2014116838**

(71) Applicant: **Panasonic Intellectual Property Management Co., Ltd.**
**Osaka-shi, Osaka 540-6207 (JP)**

(72) Inventors:
• **Taniguchi, Reiko**
  **Osaka-shi, Osaka 540-6207 (JP)**
• **Toyoda, Kenji**
  **Osaka-shi, Osaka 540-6207 (JP)**
• **Miyata, Nobuhiro**
  **Osaka-shi, Osaka 540-6207 (JP)**

(74) Representative: **Grünecker Patent- und Rechtsanwälte**
**PartG mbB**
**Leopoldstraße 4**
**80802 München (DE)**

(54) **METHOD FOR GENERATING OXYGEN, AND WATER ELECTROLYSIS DEVICE**

(57)    The present invention provides a method for generating oxygen. The method comprises (a) preparing a water electrolysis device comprising a container storing an electrolyte aqueous solution; an anode which is in contact with the electrolyte aqueous solution and includes at least one silver delafossite compound selected from the group consisting of a silver cobalt delafossite compound represented by a chemical formula $AgCoO_2$ and a silver rhodium delafossite compound represented by a chemical formula $AgRhO_2$; a cathode which is in contact with the electrolyte aqueous solution; and a power supply, wherein the at least one silver delafossite compound is in contact with the electrolyte aqueous solution, and (b) applying an electric potential difference between the cathode and the anode using the power supply to generate oxygen on the anode due to electrolysis of water which occurs on the at least one silver delafossite compound.

FIG. 1

EP 2 937 448 A1

**Description**

BACKGROUND

1. Field of the Invention

The present invention relates to a method for generating oxygen and a water electrolysis device. The present invention also relates to an anode used for the method.

2. Description of the Related Art

Great Britain Patent Publication No. 1400948B discloses a method for generating chlorine by electrolyzing sodium chloride using an anode having a delafossite compound represented by a chemical formula $ABO_2$ (where A represents platinum, palladium, silver, or cobalt, and B represents chromium, iron, cobalt, rhodium, aluminum, gadolinium, scandium, indium, thallium, lead, ruthenium, or lanthanide) on the surface thereof. However, Great Britain Patent Publication No. 1400948B is silent about a method for generating oxygen.

SUMMARY

The present invention provides a method for generating oxygen, the method comprising:

(a) preparing a water electrolysis device comprising:

a container storing an electrolyte aqueous solution;
an anode which is in contact with the electrolyte aqueous solution and includes at least one silver delafossite compound selected from the group consisting of a silver cobalt delafossite compound represented by a chemical formula $AgCoO_2$ and a silver rhodium delafossite compound represented by a chemical formula $AgRhO_2$;
a cathode which is in contact with the electrolyte aqueous solution; and
a power supply,
wherein
the at least one silver delafossite compound is in contact with the electrolyte aqueous solution, and

(b) applying an electric potential difference between the cathode and the anode using the power supply to generate oxygen on the anode due to electrolysis of water which occurs on the at least one silver delafossite compound.

The present invention also provides a method for generating oxygen, the method comprising:

(a) preparing a water electrolysis device comprising:

an electrolyte film;
an anode which is in contact with a front surface of the electrolyte film and includes at least one silver delafossite compound selected from the group consisting of a silver cobalt delafossite compound represented by a chemical formula $AgCoO_2$ and a silver rhodium delafossite compound represented by a chemical formula $AgRhO_2$;
a cathode which is in contact with a back surface of the electrolyte film; and
a power supply,
wherein
the at least one silver delafossite compound is in contact with the electrolyte aqueous solution, and

(b) applying an electric potential difference between the cathode and the anode using the power supply to generate oxygen on the anode due to electrolysis of water which occurs on the at least one silver delafossite compound.

The present invention provides an anode for generating oxygen due to electrolysis of water, the anode including at least one silver delafossite compound selected from the group consisting of a silver cobalt delafossite compound represented by a chemical formula $AgCoO_2$ and a silver rhodium delafossite compound represented by a chemical formula $AgRhO_2$.

The present invention provides a water electrolysis device comprising:

a container storing an electrolyte aqueous solution;

an anode which is in contact with the electrolyte aqueous solution and includes at least one silver delafossite compound selected from the group consisting of a silver cobalt delafossite compound represented by a chemical formula $AgCoO_2$ and a silver rhodium delafossite compound represented by a chemical formula $AgRhO_2$;
a cathode which is in contact with the electrolyte aqueous solution; and
a power supply for generating oxygen on the anode due to electrolysis of water which occurs on the at least one silver delafossite compound by applying an electric potential difference between the cathode and the anode, wherein
the at least one silver delafossite compound is in contact with the electrolyte aqueous solution.

The present invention provides a water electrolysis device comprising:

an electrolyte film;
an anode which is in contact with a front surface of the electrolyte film and includes at least one silver delafossite compound selected from the group consisting of a silver cobalt delafossite compound represented by a chemical formula $AgCoO_2$ and a silver rhodium delafossite compound represented by a chemical formula $AgRhO_2$;
a cathode which is in contact with a back surface of the electrolyte film; and
a power supply for generating oxygen on the anode due to electrolysis of water which occurs on the at least one silver delafossite compound by applying an electric potential difference between the cathode and the anode, wherein
the at least one silver delafossite compound is in contact with the electrolyte aqueous solution.

The present invention provides a method for efficiently generating oxygen by electrolyzing water using a silver delafossite compound as an anode. The present invention also provides a water electrolysis device and an anode, both of which are suitable for the method.

BRIEF DESCRIPTION OF THE DRAWINGS

FIG. 1 shows a schematic view of a water electrolysis device 100 according to a first embodiment.
FIG. 2 shows a schematic view of a thin-film electrolysis cell.
FIG. 3 is a graph showing a result of an X-ray diffraction measurement in an inventive example 1.
FIG. 4 is a graph showing an electric current - voltage property measured in the inventive example 1 and comparative examples 1 - 2.
FIG. 5 shows a schematic view of a water electrolysis device 200 according to a second embodiment.
FIG. 6 shows a schematic view of a thin-film electrolysis cell.
FIG. 7 is a graph showing a result of an X-ray diffraction measurement of silver rhodium delafossite particles in an inventive example 2.
FIG. 8 is a graph showing an electric current - voltage property measured in the inventive example 2 and comparative examples 3 - 4.

DETAILED DESCRIPTION OF THE EMBODIMENTS

The embodiments of the present invention will be described below with reference to the drawings.
The theoretical voltage required for electrolysis of water is 1.23 volts. However, in practice, a voltage more than 1.23 volts is necessary for electrolysis of water due to overvoltage in the electrode. The smaller the overvoltage is, the more efficiently the electrolysis of water proceeds. The term "overvoltage" used in the instant specification means a voltage difference from a theoretical voltage necessary for generating oxygen on an anode by electrolyzing water. For example, when a voltage of 2.0 volts is required to generate oxygen by electrolyzing water using an anode formed of metal M, the metal M has an overvoltage of 0.77 volts (= 2.0 volts - 1.23 volts).
As demonstrated in the comparative examples which will be described later, the present inventors generated oxygen by electrolyzing water using various silver delafossite compounds. As a result, almost all of the silver delafossite compounds were not suitable for electrolysis of water due to the large overvoltage thereof.
However, the present inventors found a silver delafossite compound suitable for generating oxygen by electrolyzing water from among various silver delafossite compounds to achieve the present invention. An object of the present invention is to provide a method for efficiently generating oxygen by electrolyzing water using a silver delafossite compound as an anode. Another object of the present invention is to provide a water electrolysis device and an anode, both of which are suitable for the method.

(First embodiment)

In the first embodiment, a silver cobalt delafossite compound represented by a chemical formula $AgCoO_2$ is used as a silver delafossite compound.

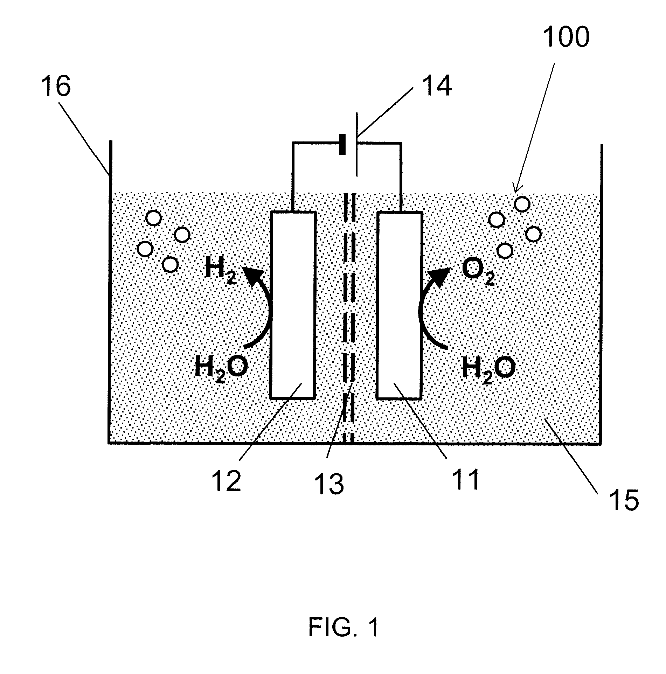

FIG. 1 shows a schematic view of a water electrolysis device 100 according to a first embodiment. The water electrolysis device 100 according to the first embodiment comprises a container 16, an anode 11, a cathode 12, and a power supply 14.

(Container 16)

An electrolyte aqueous solution 15 is stored in the container 16. An example of the electrolyte aqueous solution 15 is an alkaline aqueous solution such as a potassium hydroxide aqueous solution or sodium hydroxide aqueous solution. Water is electrolyzed using the alkaline aqueous solution to improve the efficiency of the oxygen generation and to decrease an electric power necessary for the electrolysis.

Another example of the electrolyte included in the electrolyte aqueous solution 15 is sulfuric acid, nitric acid, or perchloric acid. More specifically, an example of a cation of the electrolyte included in the electrolyte aqueous solution 15 is a proton, an alkali metal ion, or an alkaline earth metal ion. An example of an anion of the electrolyte included in the electrolyte aqueous solution 15 is a hydroxide ion represented by the chemical formula OH-, a sulfate ion represented by the chemical formula $SO_4{}^{2-}$, a nitrate ion represented by the chemical formula $NO_3{}^-$, or a perchlorate ion represented by the chemical formula $ClO_4{}^-$. A halide ion represented by the chemical formula $F^-$, $Cl^-$, $Br$ or $I^-$ is excluded from the anion of the electrolyte included in the electrolyte aqueous solution 15. In case where the electrolyte aqueous solution 15 contains halide ions, not oxygen but a halogen is generated on the anode 11. An example of the electrolyte included in the electrolyte aqueous solution 15 is a salt composed of such a cation and such an anion. For example, still another example of the electrolyte included in the electrolyte aqueous solution 15 is sodium sulfate, sodium nitrate, or potassium perchlorate.

(Anode 11)

The anode 11 and the cathode 12 are located in the container 16 in such a manner that the anode 11 and the cathode 12 are in contact with the electrolyte aqueous solution 15. The anode 11 and the cathode 12 are electrically connected with the power supply 14 which will be described later. Oxygen is generated on the anode 11. Hydrogen is generated on the cathode 12.

The anode 11 has a silver cobalt delafossite compound. Desirably, the anode 11 has the silver cobalt delafossite compound on the surface thereof so that oxygen is generated on the surface of the silver cobalt delafossite compound included in the anode 11. The silver cobalt delafossite compound is represented by the chemical formula $AgCoO_2$. In other words, the silver cobalt delafossite compound means an oxide having a delafossite compound structure in which an A site is silver and a B site is cobalt.

The silver cobalt delafossite compound has a high chemical stability. For this reason, even if the silver cobalt delafossite compound is used in a wide pH range, the silver cobalt delafossite compound is hardly decomposed.

A method for synthesizing the silver cobalt delafossite compound is not limited. An example of the method for synthesizing the silver cobalt delafossite compound is a solid state reaction method, a hydrothermal synthesis method, or a sputtering method.

The anode 11 may be formed of a conductive substrate supporting the silver cobalt delafossite compound. The method for supporting the silver cobalt delafossite compound is not limited. For example, a slurry containing the synthesized silver cobalt delafossite compound is prepared, and then the slurry is applied to the conductive substrate to support the silver cobalt delafossite compound on the conductive substrate. The slurry may contain conductive carbon particles, tin oxide, an additive for improving dispersibility, and/or a material for preventing bubbles generated during the electrolysis from being aggregated. These do not cause deterioration of a catalyst effect of the silver cobalt delafossite compound.

The conductive substrate may have various kinds of shapes such as a plate, a rod, or a mesh. It is desirable that the material of the conductive substrate is a material capable of maintaining its conductivity even if the conductive substrate is exposed to an oxidation atmosphere. An example of the material of the conductive substrate is valve metal or carbon. The valve metal means a metal having a surface on which a passivation film is formed when the surface is exposed to an acid. An example of the valve metal is titanium, aluminum, chromium, or an alloy thereof.

The anode 11 does not have to comprise the conductive substrate. Such an anode 11 may be provided by pressing or sintering particles of the silver cobalt delafossite compound. Such an anode 11 may contain a conductive carbon material for improving its conductivity, a flux material for raising the adhesivity between the particles and/or a material for preventing the bubbles generated during the electrolysis from being aggregated.

The anode 11 is in contact with the electrolyte aqueous solution 15. Particularly, the silver cobalt delafossite compound included in the anode 11 is in contact with the electrolyte aqueous solution 15. Only a part of the anode 11 may be in contact with the electrolyte aqueous solution 15, as far as the silver cobalt delafossite compound is in contact with the electrolyte aqueous solution 15.

(Cathode 12)

The cathode 12 is formed of a conductive substance. Particularly, the surface of the cathode 12 is formed of a conductive substance. An example of the suitable conductive substance is platinum or a nickel compound, both of which have a low overvoltage for generating hydrogen. The material of the conductive substance is not limited, unless the conductive substance is decomposed in the electrolyte aqueous solution 15.

The cathode 12 is in contact with the electrolyte aqueous solution 15. Particularly, the conductive substance included in the cathode 12 is in contact with the electrolyte aqueous solution 15. Only a part of the cathode 12 may be in contact with the electrolyte aqueous solution 15, as far as the conductive substance is in contact with the electrolyte aqueous solution 15.

(Power supply 14)

The power supply 14 is used to apply a predetermined electric potential difference between the anode 11 and the cathode 12. The predetermined electric potential difference is applied between the anode 11 and the cathode 12 using the power supply 14 to electrolyze water contained in the electrolyte aqueous solution 15. It is desirable to apply an electric potential difference of not less than 1.6 volts and not more than 4.0 volts. An example of the power supply 14 is a potentiostat or a battery.

(Diaphragm 13)

The water electrolysis device 100 has a diaphragm 13 between the anode 11 and the cathode 12. The diaphragm 13 divides the inside of the container 16 into a first chamber where the anode 11 is located and a second chamber where the cathode 12 is located.

An example of the diaphragm 13 is a porous ceramics substrate such as an unglazed plate, a porous polymer membrane such as a polypropylene film, or an ion-exchange membrane such as Nafion (registered trade mark).

The diaphragm 13 is provided such that oxygen generated on the anode 11 is not mixed with hydrogen generated on the cathode 12. No problem about the electrolysis of water occurs in the absence of the diaphragm 13; however, oxygen generated on the anode 11 may transfer to the cathode 12. Oxygen which has been transferred to the cathode 12 is turned into water. As a result, the efficiency of the oxygen generation is decreased. In order to control such a reverse reaction, it is desirable to provide the water electrolysis device 100 with the diaphragm 13.

In the water electrolysis device 100 shown in FIG. 1, the anode 11, the diaphragm 13, and the cathode 12 are disposed at intervals. However, the water electrolysis device 100 may be composed of an integrated electrolysis cell in which the anode 11 and the cathode 12 adhere to the front and back surfaces of the diaphragm 13, respectively.

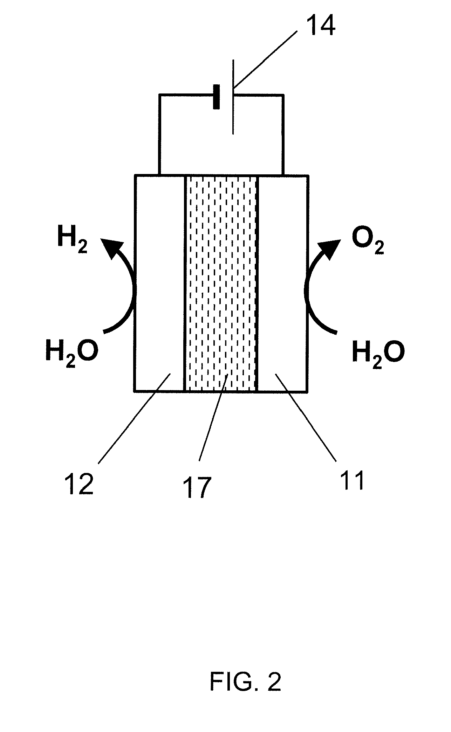

FIG. 2 shows a thin-film electrolysis cell which is another example of the water electrolysis device. The thin-film electrolysis cell shown in FIG. 2 comprises an electrolyte film 17 in place of the container 16 of the water electrolysis device 100. The thin-film electrolysis cell shown in FIG. 2 comprises the electrolyte film 17, the anode 11 formed on the front surface of the electrolyte film 17, and the cathode 12 formed on the back surface of the electrolyte film 17.

An example of the electrolyte film 17 is an ion-exchange membrane or a ceramic solid electrolyte film. An example of the ion-exchange membrane is a cation exchange membrane such as Nafion (registered trade mark) or Selemion (registered trade mark), or an anion exchange membrane (available from Tokuyama Corporation, for example).

An example of the ceramic solid electrolyte film 17 is a zirconia-based ceramic film of yttria-stabilized zirconia (hereinafter, referred to as "YSZ") or scandia-stabilized zirconia (hereinafter, referred to as "ScSZ"). The thin-film electrolysis cell comprising the electrolyte film 17 formed of the ion-exchange membrane is a polymer electrolyte membrane (hereinafter, referred to as "PEM") electrolysis cell. The electrolysis cell comprising the electrolyte film 17 formed of the ceramic solid electrolyte is a solid electrolyte electrolysis cell. The solid electrolyte electrolysis cell is also a high-temperature steam electrolysis cell.

(Method for generating oxygen)

First, the water electrolysis device 100 is prepared. In other words, a user of the water electrolysis device 100 procures the water electrolysis device 100. Then, an electric potential difference is applied between the cathode 12 and the anode 11 using the power supply 14. In other words, the user applies the electric potential difference between the cathode 12 and the anode 11 using the power supply 14. The water is split electrolytically on the silver cobalt delafossite compound through the voltage application. In this way, oxygen is generated on the anode 11.

(Second embodiment)

In the second embodiment, a silver rhodium delafossite compound represented by a chemical formula $AgRhO_2$ is used as a silver delafossite compound.

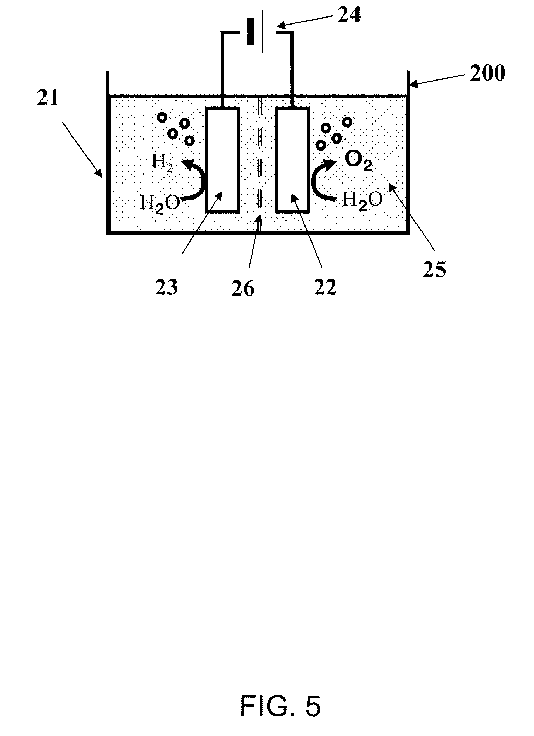

FIG. 5 shows a schematic view of a water electrolysis device 200 according to a second embodiment. The water electrolysis device 200 according to the second embodiment comprises a container 21, an anode 22, a cathode 23, and a power supply 24.

(Container 21)

An electrolyte aqueous solution 25 is stored in the container 21. An example of the electrolyte aqueous solution 25 is an alkaline aqueous solution such as a potassium hydroxide aqueous solution or sodium hydroxide aqueous solution. Water is electrolyzed using the alkaline aqueous solution to improve the efficiency of the oxygen generation and to decrease an electric power necessary for the electrolysis.

Another example of the electrolyte included in the electrolyte aqueous solution 25 is sulfuric acid, nitric acid, or perchloric acid. More specifically, an example of a cation of the electrolyte included in the electrolyte aqueous solution 25 is a proton, an alkali metal ion, or an alkaline earth metal ion. An example of an anion of the electrolyte included in the electrolyte aqueous solution 25 is a hydroxide ion represented by the chemical formula $OH^-$, a sulfate ion represented by the chemical formula $SO_4^{2-}$, a nitrate ion represented by the chemical formula $NO_3^-$, or a perchlorate ion represented by the chemical formula $ClO_4^-$. A halide ion represented by the chemical formula $F^-$, $Cl^-$, $Br^-$ or $I^-$ is excluded from the anion of the electrolyte included in the electrolyte aqueous solution 25. In case where the electrolyte aqueous solution 25 contains halide ions, not oxygen but a halogen is generated on the anode 22. An example of the electrolyte included in the electrolyte aqueous solution 25 is a salt composed of such a cation and such an anion. For example, still another example of the electrolyte included in the electrolyte aqueous solution 25 is sodium sulfate, sodium nitrate, or potassium perchlorate.

(Anode 22)

The anode 22 and the cathode 23 are located in the container 21 in such a manner that the anode 22 and the cathode 23 are in contact with the electrolyte aqueous solution 25. The anode 22 and the cathode 23 are electrically connected with the power supply 24 which will be described later. Oxygen is generated on the anode 22. Hydrogen is generated on the cathode 23.

The anode 22 has a silver rhodium delafossite compound. Desirably, the anode 22 has the silver rhodium delafossite compound on the surface thereof so that oxygen is generated on the surface of the silver rhodium delafossite compound included in the anode 22. The silver rhodium delafossite compound is represented by the chemical formula $AgRhO_2$. In other words, the silver rhodium delafossite compound means an oxide having a delafossite compound structure in which an A site is silver and a B site is rhodium.

The silver rhodium delafossite compound has a high chemical stability. For this reason, even if the silver rhodium delafossite compound is used in a wide pH range, the silver rhodium delafossite compound is hardly decomposed.

A method for synthesizing the silver rhodium delafossite compound is not limited. An example of the method for synthesizing the silver rhodium delafossite compound is an ion exchange reaction method, a hydrothermal synthesis method, or a sputtering method.

The anode 22 may be formed of a conductive substrate supporting the silver rhodium delafossite compound. The method for supporting the silver rhodium delafossite compound is not limited. For example, a slurry containing the synthesized silver rhodium delafossite compound is prepared, and then the slurry is applied to the conductive substrate to support the silver rhodium delafossite compound on the conductive substrate. The slurry may contain conductive carbon particles, tin oxide, an additive for improving dispersibility, and/or a material for preventing bubbles generated during the electrolysis from being aggregated. These do not cause deterioration of a catalyst effect of the silver rhodium delafossite compound.

The conductive substrate may have various kinds of shapes such as a plate, a rod, or a mesh. It is desirable that the material of the conductive substrate is a material capable of maintaining its conductivity even if the conductive substrate is exposed to an oxidation atmosphere. An example of the material of the conductive substrate is valve metal or carbon. The valve metal means a metal having a surface on which a passivation film is formed when the surface is exposed to an acid. An example of the valve metal is titanium, aluminum, chromium, or an alloy thereof.

The anode 22 does not have to comprise the conductive substrate. Such an anode 22 may be provided by pressing or sintering particles of the silver rhodium delafossite compound. Such an anode 22 may contain a conductive carbon material for improving its conductivity, a flux material for raising the adhesivity between the particles and/or a material for preventing the bubbles generated during the electrolysis from being aggregated.

The anode 22 is in contact with the electrolyte aqueous solution 25. Particularly, the silver rhodium delafossite compound included in the anode 22 is in contact with the electrolyte aqueous solution 25. Only a part of the anode 22 may be in contact with the electrolyte aqueous solution 25, as far as the silver rhodium delafossite compound is in contact with the electrolyte aqueous solution 25.

(Cathode 23)

The cathode 23 is formed of a conductive substance. Particularly, the surface of the cathode 23 is formed of a conductive substance. An example of the suitable conductive substance is platinum or a nickel compound, both of which have a low overvoltage for generating hydrogen. The material of the conductive substance is not limited, unless the conductive substance is decomposed in the electrolyte aqueous solution 25.

The cathode 23 is in contact with the electrolyte aqueous solution 25. Particularly, the conductive substance included in the cathode 23 is in contact with the electrolyte aqueous solution 25. Only a part of the cathode 23 may be in contact with the electrolyte aqueous solution 25, as far as the conductive substance is in contact with the electrolyte aqueous solution 25.

(Power supply 24)

The power supply 24 is used to apply a predetermined electric potential difference between the anode 22 and the cathode 23. The predetermined electric potential difference is applied between the anode 22 and the cathode 23 using the power supply 24 to electrolyze water contained in the electrolyte aqueous solution 25. It is desirable to apply an electric potential difference of not less than 1.6 volts and not more than 4.0 volts. An example of the power supply 24 is a potentiostat or a battery.

(Diaphragm 26)

The water electrolysis device 200 has a diaphragm 26 between the anode 22 and the cathode 23. The diaphragm 26 divides the inside of the container 21 into a first chamber where the anode 22 is located and a second chamber where the cathode 23 is located.

An example of the diaphragm 26 is a porous ceramics substrate such as an unglazed plate, a porous polymer membrane such as a polypropylene film, or an ion-exchange membrane such as Nafion (registered trade mark).

The diaphragm 26 is provided such that oxygen generated on the anode 22 is not mixed with hydrogen generated on the cathode 23. No problem about the electrolysis of water occurs in the absence of the diaphragm 26; however, oxygen generated on the anode 22 may transfer to the cathode 23. Oxygen which has been transferred to the cathode 23 is turned into water. As a result, the efficiency of the oxygen generation is decreased. In order to control such a reverse reaction, it is desirable to provide the water electrolysis device 200 with the diaphragm 26.

In the water electrolysis device 200 shown in FIG. 5, the anode 22, the diaphragm 26, and the cathode 23 are disposed at intervals. However, the water electrolysis device 200 may be composed of an integrated electrolysis cell in which the anode 22 and the cathode 23 adhere to the front and back surfaces of the diaphragm 26, respectively.

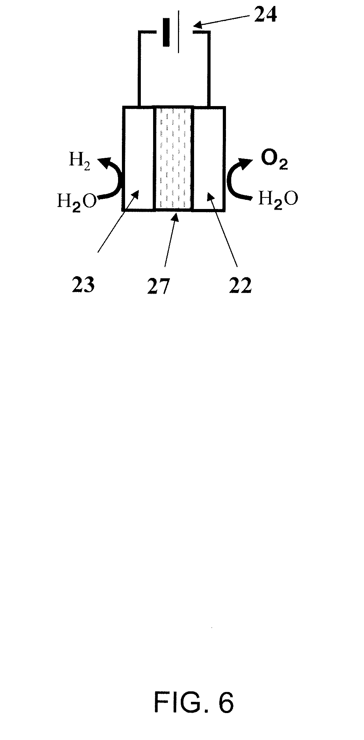

FIG. 6 shows a thin-film electrolysis cell which is another example of the water electrolysis device. The thin-film electrolysis cell shown in FIG. 6 comprises an electrolyte film 27 in place of the container 21 of the water electrolysis device 200. The thin-film electrolysis cell shown in FIG. 6 comprises the electrolyte film 27, the anode 22 formed on the front surface of the electrolyte film 27, and the cathode 23 formed on the back surface of the electrolyte film 27.

An example of the electrolyte film 27 is an ion-exchange membrane or a ceramic solid electrolyte film. An example of the ion-exchange membrane is a cation exchange membrane such as Nafion (registered trade mark) or Selemion (registered trade mark), or an anion exchange membrane (available from Tokuyama Corporation, for example).

An example of the ceramic solid electrolyte film 27 is a zirconia-based ceramic film of yttria-stabilized zirconia (hereinafter, referred to as "YSZ") or scandia-stabilized zirconia (hereinafter, referred to as "ScSZ"). The thin-film electrolysis cell comprising the electrolyte film 27 formed of the ion-exchange membrane is a polymer electrolyte membrane (hereinafter, referred to as "PEM") electrolysis cell. The electrolysis cell comprising the electrolyte film 27 formed of the ceramic solid electrolyte is a solid electrolyte electrolysis cell. The solid electrolyte electrolysis cell is also a high-temperature steam electrolysis cell.

(Method for generating oxygen)

First, the water electrolysis device 200 is prepared. In other words, a user of the water electrolysis device 200 procures the water electrolysis device 200. Then, an electric potential difference is applied between the cathode 23 and the anode 22 using the power supply 24. In other words, the user applies the electric potential difference between the cathode 23 and the anode 22 using the power supply 24. The water is split electrolytically on the silver rhodium delafossite compound through the voltage application. In this way, oxygen is generated on the anode 22.

(Findings of the present inventors)

The present inventors investigated how the efficiency of oxygen generation of the silver delafossite compound represented by the chemical formula $ABO_2$ and having Ag at the A site depends on the material of the B site.
As a result, as demonstrated in the inventive example 2 and the comparative examples 3 - 4, all of which will be described later, the present inventors found that the efficiency of the oxygen generation is varied depending on the material of the B site in the silver delafossite compound. Among others, an anode including a silver delafossite compound in which the B site has rhodium (Rh) had a significantly smaller overvoltage than an anode including a silver delafossite compound in which the B site has iron (Fe) or aluminum (Al). As just described, the present inventors conducted experiments by varying the material of the B site. As a result, the present inventors found that oxygen is generated with high efficiency using an anode including silver rhodium delafossite.

EXAMPLES

The following examples describe the present invention in more detail. The present inventors performed the following experiments to clarify the relationship between the material of the anode used for the water electrolysis device and the voltage required to generate oxygen on the anode.

(Inventive example 1)

(Preparation of the anode 11)

The anode 11 according to the inventive example 1 was made by supporting a silver cobalt delafossite compound on a conductive carbon substrate.
First, the silver cobalt delafossite compound was prepared by a hydrothermal synthesis method.
Particularly, cobalt hydroxide represented by the chemical formula $Co(OH)_2$ (available from Wako Pure Chemical Industries, Ltd.) was heated under an oxygen atmosphere at a temperature of 120 degrees Celsius for 24 hours to give cobalt oxyhydroxide represented by the chemical formula CoOOH. Cobalt oxyhydroxide represented by the chemical formula CoOOH (0.25 grams) and silver oxide represented by the chemical formula $Ag_2O$ (available from Wako Pure Chemical Industries, Ltd., 0.63 grams) were mixed with a sodium hydroxide aqueous solution (40 milliliters) having a concentration of 2 mol/L to give a mixture.
The mixture was heated in a Teflon (registered trade mark) vessel at a temperature of 210 degrees Celsius for 60 hours. In this way, a product material was obtained.
Then, the obtained product material was washed with water. Subsequently, the washed product material was subjected to suction filtration. In this way, a solid material contained in the product material was extracted. The extracted solid material was dried at a temperature of 80 degrees Celsius for 15 hours.
The dried solid material was ground in an agate mortar. In this way, particles of the silver cobalt delafossite compound were obtained.
The obtained particles of the silver cobalt delafossite compound were subjected to X-ray diffraction using an X-ray diffraction device (available from PANalytical, trade name: X'Pert PRO MPD, Target: Cu, Acceleration voltage: 45 kV).

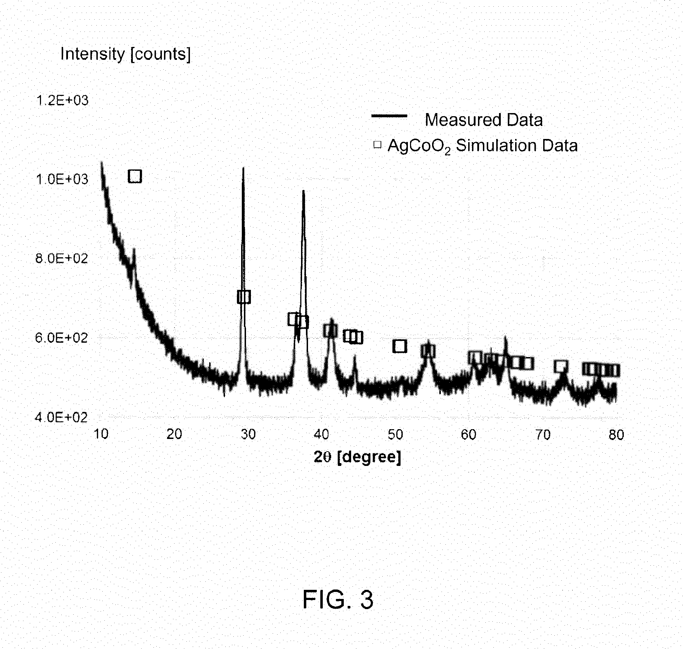

FIG. 3 shows a result of the X-ray diffraction measurement. The diffraction angle and relative intensity of the peaks shown in FIG. 3 were in good accord with the diffraction angle and relative intensity of the peaks of the silver cobalt delafossite site obtained by simulating with a simulator "RIETAN-FP".
The particles of the silver cobalt delafossite compound (59 milligrams) were dispersed in pure water (2 milliliters) to prepare a slurry.
Ultrasonic was applied in acetone to a high density percolation graphite (hereinafter, referred to as "HPG substrate", available form Toyo Tanso Co., Ltd., trade name: HPG-59) having an effective reaction area of 0.28 square centimeters to wash the HPG substrate. Then, ultrasonic was applied in ethanol to the HPG substrate to wash the HPG substrate again.

The slurry (40 microliters) was dropped on the HPG substrate. Then, the HPG substrate was dried at a temperature of 80 degrees Celsius for 15 minutes. A Nafion dispersion liquid having a concentration of 5% (available form Sigma Aldrich) was diluted four times using ethanol to prepare a Nafion dispersion liquid having a concentration of 1.2%. Then, the Nafion dispersion liquid (10 microliters) was dropped on the HPG substrate. Finally, the HPG substrate was dried at a temperature of 80 degrees Celsius for 10 minutes. In this way, the anode containing the silver cobalt delafossite compound was obtained.

(Evaluation of oxygen generation property)

The obtained anode substrate was attached as a working electrode to a rotating disk electrode attachment (available from Nikko Keisoku) using a cylindrical cap.

Then, a reversible hydrogen electrode (hereinafter, referred to as "RHE") was used as a reference electrode. A platinum electrode was used as a counter electrode. A potassium hydroxide aqueous solution having a concentration of 1 mol/L was used as an electrolyte solution. An electric potential was swept using a potentiostat (available from BAS Inc., trade name: ALS-760C) to measure an electric current - voltage property.

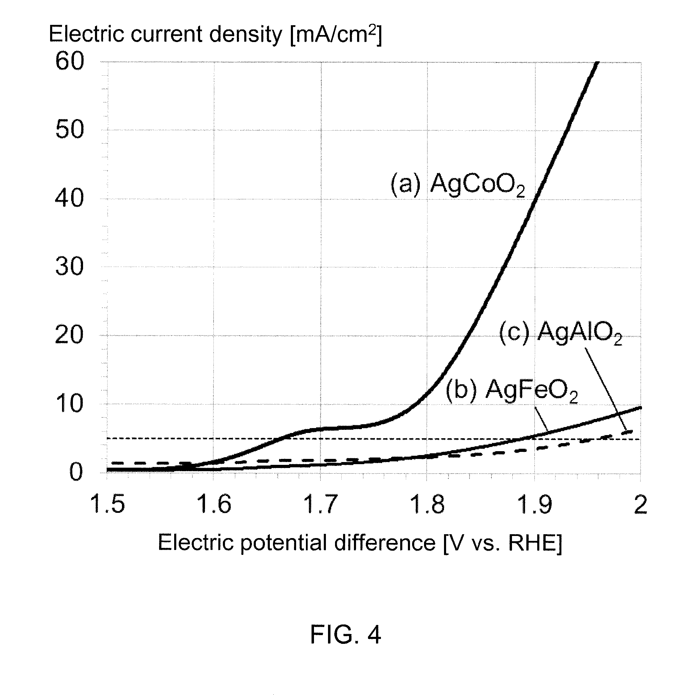

The curve (a) in FIG. 4 is the electric current - voltage property according to the inventive example 1 at a rotating speed of 2000 rpm. The overvoltage was defined by the following mathematical formula (III):

$$\text{Overvoltage} = \text{Electric Potential Difference EPD1 (volt vs. RHE)} - 1.23 \text{ (volt vs. RHE)} \quad \text{(III)}$$

where the Electric Potential Difference EPD1 represents an electric potential difference between the reference electrode and the working electrode at the moment when an electric current of 5 mA/cm$^2$ flows between the counter electrode and the working electrode.

The efficiency of oxygen generation is increased with a decrease in the overvoltage.

As is clear from FIG. 4, the anode according to the inventive example 1 had an electric potential difference EPD1 of 1.66 volts. Therefore, the anode according to the inventive example 1 had an overvoltage of 0.43 volts.

(Comparative example 1)

In the comparative example 1, a silver iron delafossite compound represented by the chemical formula $AgFeO_2$ was prepared as below and the overvoltage thereof was calculated.

A sodium hydroxide aqueous solution (1 mol/L) was dropped into an aqueous solution in which iron chloride tetrahydrate represented by the chemical formula $FeCl_2 \cdot 4H_2O$ (available from Wako Pure Chemical Industries, Ltd.) was dissolved, while the air was supplied to the sodium hydroxide aqueous solution. In this way, iron oxyhydroxide represented by the chemical formula FeOOH was obtained.

Then, a delafossite compound was prepared similarly to the case of the inventive example 1 except that the iron oxyhydroxide was used in place of cobalt hydroxide. In this way, particles of a silver iron delafossite compound were obtained. The obtained particles of the silver iron delafossite compound contained impurities such as silver oxide represented by the chemical formula $Ag_2O$. The obtained particles of the silver iron delafossite compound were immersed in an ammonia aqueous solution (10%) for about 30 minutes. In this way, a silver iron delafossite compound having a low-impurity concentration was obtained.

An anode containing the silver iron delafossite compound was fabricated similarly to the case of the inventive example 1. Then, the oxygen generation property of the anode was evaluated. The curve (b) in FIG. 4 is the electric current - voltage property of the anode according to the comparative example 1. As is clear from FIG. 4, the anode according to the comparative example 1 had an electric potential difference EPD1 of 1.89 volts. Therefore, the anode according to the comparative example 1 had an overvoltage of 0.66 volts.

(Comprative example 2)

In the comparative example 2, a silver aluminum delafossite compound represented by the chemical fomula $AgAlO_2$ was prepared. The overvoltage thereof was also calculated.

In particular, a delafossite compound was prepared similarly to the case of the comparative example 1, except that sodium aluminate represented by the chemical formula $NaAlO_2$ (available from Kojundo Chemical Laboratory Co., Ltd.) was used in place of iron oxyhydroxide. In this way, a silver aluminum delafossite compound was obtained.

Then, similarly to the case of the inventive example 1, an anode containing the silver aluminum delafossite compound was fabricated. Then, the oxygen generation property of the anode was evaluated. The curve (c) in FIG. 4 is the electric current - voltage property of the anode according to the comparative example 2. As is clear from FIG. 4, the anode according to the comparative example 2 had an electric potential difference EPD1 of 1.96 volts. Therefore, the anode according to the comparative example 2 had an overvoltage of 0.73 volts.

The following Table 1 shows the materials, the electric potential differences EPD1, and the overvoltages of the anodes according to the inventive example 1 and the comparative examples 1 - 2.

[Table 1]

|  | Catalyst material | Electric potential difference EPD1 (vs. RHE) | Overvoltage (vs. RHE) |
|---|---|---|---|
| Inventive example 1 | $AgCoO_2$ | 1.66 volts | 0.43 volts |
| Comparative example 1 | $AgFeO_2$ | 1.89 volts | 0.66 volts |
| Comparative example 2 | $AgAlO_2$ | 1.96 volts | 0.73 volts |

As is clear from Table 1, only the silver cobalt delafossite compound according to the inventive example 1 has a low overvoltage. For this reason, a water electrolysis device comprising the anode formed of the silver cobalt delafossite compound according to the inventive example 1 has high energy efficiency.

(Inventive example 2)

(Preparation of the anode 22)

The anode 22 according to the inventive example 2 was made by supporting a silver rhodium delafossite compound on a conductive carbon substrate.

Silver rhodium delafossite was prepared by an ion exchange reaction method. In particular, rhodium oxide represented by the chemical formula $Rh_2O_3$ (available from Wako Pure Chemical Industries, Ltd., 1 gram) and lithium hydroxide represented by the chemical formula LiOH (available from Tokyo Chemical Industry Co., Ltd., 0.2 grams) were sintered under an oxygen atmosphere and at a temperature of 850 degrees Celsius for 48 hours to obtain lithium rhodate represented by the chemical formula $LiRhO_2$.

The obtained lithium rhodate (0.25 grams), silver nitrate represented by the chemical formula $AgNO_3$ (available from Wako Pure Chemical Industries, Ltd., 0.33 grams), and potassium nitrate represented by the chemical formula $KNO_3$ (available from Wako Pure Chemical Industries, Ltd., 0.10 gram) were encapsulated into an ampule (available from Corning Incorporated, trade name: PYREX (registered trade mark)). Then the mixture was sintered at a temperature of 350 degrees Celsius for 350 hours to obtain a product material.

The product material was washed with water several times. Then, the product material was subjected to suction filtration. In this way, a solid material contained in the product material was extracted . The extracted solid material was dried at a temperature of 80 degrees Celsius for 15 hours.

The dried solid material was ground in an agate mortar. In this way, particles of the silver rhodium delafossite compound were obtained.

The obtained particles of the silver rhodium delafossite compound were subjected to X-ray diffraction using an X-ray diffraction device (available from PANalytical, trade name: X'Pert PRO MPD, Target: Cu, Acceleration voltage: 45 kV).

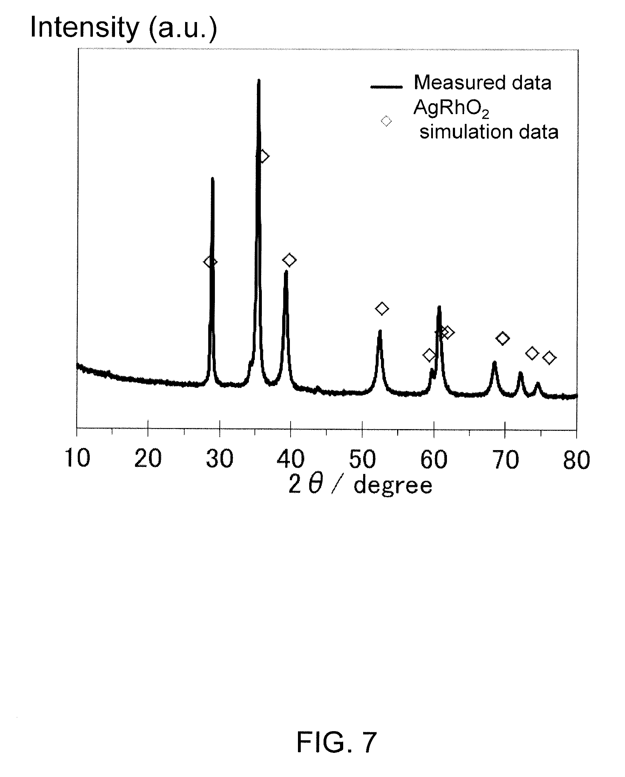

FIG. 7 shows a result of the X-ray diffraction measurement. The diffraction angle and relative intensity of the peaks shown in FIG. 7 were in good accord with the diffraction angle and relative intensity of the peaks of the silver rhodium delafossite site obtained by simulating with a simulator "RIETAN-FP". For this reason, the obtained material was identified as silver rhodium delafossite.

The particles of the silver rhodium delafossite compound (74 milligrams) were dispersed in pure water (2 milliliters) to prepare a slurry.

Ultrasonic was applied in acetone to a high density percolation graphite (hereinafter, referred to as "HPG substrate", available form Toyo Tanso Co., Ltd., trade name: HPG-59) having an effective reaction area of 0.28 square centimeters to wash the HPG substrate. Then, ultrasonic was applied in ethanol to the HPG substrate to wash the HPG substrate again. Further, ultrasonic was applied in pure water to the HPG substrate to wash the HPG substrate.

The slurry (40 microliters) was dropped on the HPG substrate. Then, the HPG substrate was dried at a temperature of 80 degrees Celsius for 15 minutes. A Nafion dispersion liquid having a concentration of 5% (available form Sigma Aldrich) was diluted four times using ethanol. Then, the diluted Nafion dispersion liquid (10 microliters) was dropped on the HPG substrate. Finally, the HPG substrate was dried at a temperature of 80 degrees Celsius for 10 minutes. In this way, the anode containing the silver rhodium delafossite particles was obtained.

(Evaluation of oxygen generation property)

The obtained anode substrate was attached as a working electrode to a rotating disk electrode attachment (available from Nikko Keisoku) using a cylindrical cap.

Then, a reversible hydrogen electrode (hereinafter, referred to as "RHE") was used as a reference electrode. A platinum electrode was used as a counter electrode. A potassium hydroxide aqueous solution having a concentration of 1 mol/L was used as an electrolyte solution. An electric potential was swept using a potentiostat (available from BAS Inc., trade name: ALS-760C) to measure an electric current - voltage property.

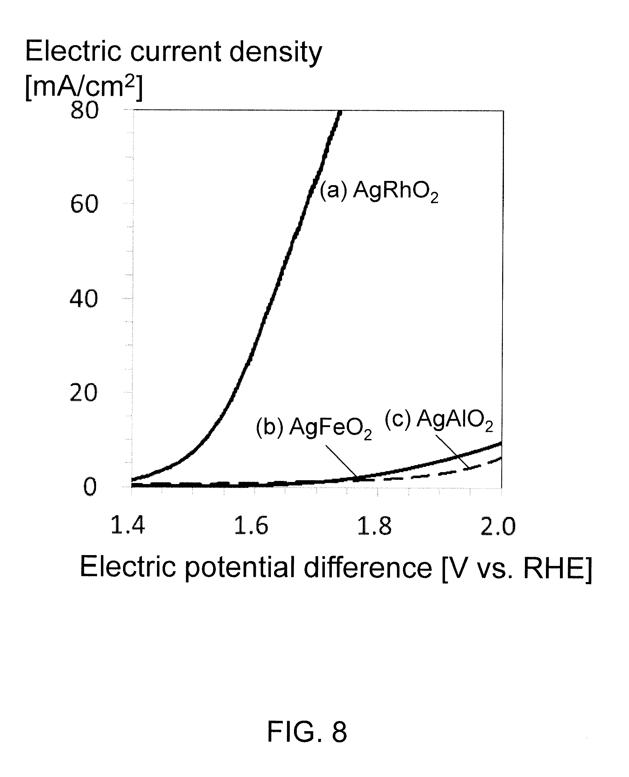

The curve (a) in FIG. 8 is the electric current - voltage property (C-V: Cyclic Voltammetry) of silver rhodium delafossite according to the inventive example 2 at a rotating speed of 2000 rpm. The overvoltage was defined by the following mathematical formula (III):

$$\text{Overvoltage} = \text{Electric Potential Difference EPD1 (volt vs. RHE)} - 1.23$$
$$\text{(volt vs. RHE)} \quad \text{(III)}$$

where the Electric Potential Difference EPD1 represents an electric potential difference between the reference electrode and the working electrode at the moment when an electric current of 5 mA/cm$^2$ flows between the counter electrode and the working electrode.

The efficiency of oxygen generation is increased with a decrease in the overvoltage.

As is clear from FIG. 8, the anode according to the inventive example 2 had an electric potential difference EPD1 of 1.47 volts. Therefore, the anode according to the inventive example 2 had an overvoltage of 0.24 volts.

(Comparative example 3)

In the comparative example 3, a silver iron delafossite compound represented by the chemical formula $AgFeO_2$ was prepared as below and the overvoltage thereof was calculated.

A sodium hydroxide aqueous solution (1 mol/L) was dropped into an aqueous solution in which iron chloride tetrahydrate represented by the chemical formula $FeCl_2 \cdot 4H_2O$ (available from Wako Pure Chemical Industries, Ltd.) was dissolved, while the air was supplied to the aqueous solution. In this way, iron oxyhydroxide represented by the chemical formula FeOOH was obtained.

The obtained iron oxyhydroxide (0.24 grams), silver(I) oxide represented by the chemical formula $Ag_2O$ (available from Wako Pure Chemical Industries, Ltd., 0.63 grams), sodium hydroxide (available from Wako Pure Chemical Industries, Ltd., 3.0 grams), and pure water (40 milliliters) were put in a Teflon (registered trade mark) vessel having a volume of 100 milliliters. The mixture contained in the vessel was heated in a stainless pressure-resistant vessel at a temperature of 210 degrees Celsius for 60 hours to obtain a product material.

The product material was washed with water several times. Then, the product material was subjected to suction filtration. In this way, a solid material contained in the product material was extracted. The extracted solid material was dried at a temperature of 80 degrees Celsius for 15 hours.

The dried solid material was ground in an agate mortar. In this way, particles of the silver iron delafossite compound were obtained.

The obtained particles of the silver iron delafossite compound contained impurities such as silver oxide represented by the chemical formula $Ag_2O$. The obtained particles of the silver iron delafossite compound were immersed in an ammonia aqueous solution (10%) for about 30 minutes. In this way, a silver iron delafossite compound having a low-impurity concentration was obtained.

An anode containing the silver iron delafossite particles was fabricated similarly to the case of the inventive example 2. Then, the oxygen generation property of the anode was evaluated. The curve (b) in FIG. 8 is the electric current - voltage property of the anode according to the comparative example 3. As is clear from FIG. 8, the anode according to the comparative example 3 had an electric potential difference EPD1 of 1.89 volts. Therefore, the anode according to the comparative example 3 had an overvoltage of 0.66 volts.

(Comparative example 4)

In the comparative example 4, a silver aluminum delafossite compound represented by the chemical fomula $AgAlO_2$ was prepared as below and the overvoltage thereof was also calculated.

In particular, a delafossite compound was prepared similarly to the case of the comparative example 3, except that sodium aluminate represented by the chemical formula $NaAlO_2$ (available from Kojundo Chemical Laboratory Co., Ltd.) was used in place of iron oxyhydroxide. In this way, particles of a silver aluminum delafossite compound were obtained.

Then, similarly to the case of the inventive example 2, an anode containing the silver aluminum delafossite compound was fabricated. Then, the oxygen generation property of the anode was evaluated. The curve (c) in FIG. 8 is the electric current - voltage property of the anode according to the comparative example 4. As is clear from FIG. 8, the anode according to the comparative example 4 had an electric potential difference EPD1 of 1.96 volts. Therefore, the anode according to the comparative example 4 had an overvoltage of 0.73 volts.

The following Table 2 shows the materials, the electric potential differences EPD1, and the overvoltages of the anodes according to the inventive example 2 and the comparative examples 3 - 4.

[Table 2]

|  | Catalyst material | Electric potential difference EPD1 (vs. RHE) | Overvoltage (vs. RHE) |
|---|---|---|---|
| Inventive example 2 | $AgRhO_2$ | 1.47 volts | 0.25 volts |
| Comparative example 3 | $AgFeO_2$ | 1.89 volts | 0.66 volts |
| Comparative example 4 | $AgAlO_2$ | 1.96 volts | 0.73 volts |

As is clear from Table 2, only the silver rhodium delafossite compound according to the inventive example 2 has a low overvoltage. For this reason, a water electrolysis device comprising the anode formed of the silver rhodium delafossite compound according to the inventive example 2 has high energy efficiency.

INDUSTRIAL APPLICABILITY

The present invention provides a method for efficiently generating oxygen by electrolyzing water using a silver delafossite compound as an anode.

REFERENCE SIGNS LIST

11:      anode
12:      cathode
13:      diaphragm
14:      power supply
15:      electrolyte aqueous solution
16:      container
17:      electrolyte film
100:    water electrolysis device

21:      container
22:      anode
23:      cathode
24:      power supply
25:      electrolyte aqueous solution
26:      diaphragm
27:      electrolyte film
200:    water electrolysis device

**Claims**

1.   A method for generating oxygen, the method comprising:

        (a) preparing a water electrolysis device comprising:

a container storing an electrolyte aqueous solution;
an anode which is in contact with the electrolyte aqueous solution and includes at least one silver delafossite compound selected from the group consisting of a silver cobalt delafossite compound represented by a chemical formula $AgCoO_2$ and a silver rhodium delafossite compound represented by a chemical formula $AgRhO_2$;
a cathode which is in contact with the electrolyte aqueous solution; and
a power supply,
wherein
the at least one silver delafossite compound is in contact with the electrolyte aqueous solution, and

(b) applying an electric potential difference between the cathode and the anode using the power supply to generate oxygen on the anode due to electrolysis of water which occurs on the at least one silver delafossite compound.

2. The method according to Claim 1, wherein
the container further comprises a diaphragm; and
the diaphragm divides an inside of the container into a first chamber having the anode and a second chamber having the cathode.

3. A method for generating oxygen, the method comprising:

(a) preparing a water electrolysis device comprising:

an electrolyte film;
an anode which is in contact with a front surface of the electrolyte film and includes at least one silver delafossite compound selected from the group consisting of a silver cobalt delafossite compound represented by a chemical formula $AgCoO_2$ and a silver rhodium delafossite compound represented by a chemical formula $AgRhO_2$;
a cathode which is in contact with a back surface of the electrolyte film; and
a power supply,
wherein
the at least one silver delafossite compound is in contact with the electrolyte aqueous solution, and

(b) applying an electric potential difference between the cathode and the anode using the power supply to generate oxygen on the anode due to electrolysis of water which occurs on the at least one silver delafossite compound.

4. An anode for generating oxygen due to electrolysis of water, the anode including at least one silver delafossite compound selected from the group consisting of a silver cobalt delafossite compound represented by a chemical formula $AgCoO_2$ and a silver rhodium delafossite compound represented by a chemical formula $AgRhO_2$.

5. A water electrolysis device comprising:

a container storing an electrolyte aqueous solution;
an anode which is in contact with the electrolyte aqueous solution and includes at least one silver delafossite compound selected from the group consisting of a silver cobalt delafossite compound represented by a chemical formula $AgCoO_2$ and a silver rhodium delafossite compound represented by a chemical formula $AgRhO_2$;
a cathode which is in contact with the electrolyte aqueous solution; and
a power supply for generating oxygen on the anode due to electrolysis of water which occurs on the at least one silver delafossite compound by applying an electric potential difference between the cathode and the anode, wherein
the at least one silver delafossite compound is in contact with the electrolyte aqueous solution.

6. A water electrolysis device comprising:

an electrolyte film;
an anode which is in contact with a front surface of the electrolyte film and includes at least one silver delafossite compound selected from the group consisting of a silver cobalt delafossite compound represented by a chemical

formula AgCoO$_2$ and a silver rhodium delafossite compound represented by a chemical formula AgRhO$_2$;
a cathode which is in contact with a back surface of the electrolyte film; and
a power supply for generating oxygen on the anode due to electrolysis of water which occurs on the at least one silver delafossite compound by applying an electric potential difference between the cathode and the anode, wherein
the at least one silver delafossite compound is in contact with the electrolyte aqueous solution.

FIG. 1

FIG. 2

FIG. 3

FIG. 4

FIG. 5

$H_2$

$H_2O$

$O_2$

$H_2O$

23    27    22

FIG. 6

Intensity (a.u.)

FIG. 7

FIG. 8

Europäisches Patentamt

European Patent Office

Office européen des brevets

# EUROPEAN SEARCH REPORT

Application Number

EP 15 15 9306

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | GB 1 400 948 A (PPG INDUSTRIES INC) 16 July 1975 (1975-07-16) * claims 1,7-9,11,12 * * page 9, lines 17-21 * | 1-6 | INV. C25B11/04 C25B1/04 C25B1/10 |
| X<br><br>Y | EP 1 345 279 A1 (SHINKO ELECTRIC IND CO [JP]) 17 September 2003 (2003-09-17) * claims 1,6 * * paragraphs [0026] - [0034] * | 5<br><br>1-4,6 | |
| Y | HINOGAMI REIKO ET AL: "Active copper delafossite anode for oxygen evolution reaction", ELECTROCHEMISTRY COMMUNICATIONS, vol. 35, 29 August 2013 (2013-08-29), pages 142-145, XP028740810, ISSN: 1388-2481, DOI: 10.1016/J.ELECOM.2013.08.018 * abstract * * figures 2,3 * * table 1 * * page 142, left-hand column, paragraph 1-2 * | 1-6 | |
| Y | CARCIA P F ET AL: "O2 Electrocatalysis on Thin Film Metallic Oxide Electrodes with the Delafossite Structure", JNL OF ELECTROCHEMICAL STY,, vol. 127, no. 9, 1 September 1980 (1980-09-01), pages 1974-1978, XP001311024, * abstract * * page 1978, left-hand column, paragraph 5 * | 1-6 | |

TECHNICAL FIELDS SEARCHED (IPC)

C25B

The present search report has been drawn up for all claims

| Place of search | Date of completion of the search | Examiner |
|---|---|---|
| Munich | 14 August 2015 | Perednis, Dainius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 15 9306

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2015

| Patent document cited in search report | | Publication date | Patent family member(s) | | Publication date |
|---|---|---|---|---|---|
| GB 1400948 | A | 16-07-1975 | NONE | | |
| EP 1345279 | A1 | 17-09-2003 | CA | 2395884 A1 | 02-05-2002 |
| | | | EP | 1345279 A1 | 17-09-2003 |
| | | | US | 2002183200 A1 | 05-12-2002 |
| | | | WO | 0235621 A1 | 02-05-2002 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1400948 B